# EUROPÄISCHE PATENTSCHRIFT

(11) **EP 3 798 088 B1**
(45) Veröffentlichungstag und Bekanntmachung des Hinweises auf die Patenterteilung: **25.10.2023**
(21) Anmeldenummer: 19199613.1
(22) Anmeldetag: 25.09.2019
(51) Int. Cl.: G06Q 10/02, G06Q 10/0631, G06Q 50/30, B61L 15/00

(54) **VERFAHREN UND ANORDNUNG ZUM VERTEILEN VON PERSONEN IN EINEM PERSONENZUG**
METHOD AND ARRANGEMENT FOR DISTRIBUTING PERSONS IN A PASSENGER TRAIN
PROCÉDÉ ET DISPOSITIF DE RÉPARTITION DES VOYAGEURS DANS UN TRAIN

(43) Veröffentlichungstag der Anmeldung: 31.03.2021
(73) Patentinhaber: Siemens Mobility GmbH, 81739 München (DE)
(72) Erfinder: Bergs, Christoph, 52134 Herzogenrath (DE); Boschert, Stefan, 85579 Neubiberg (DE); Glas, Sylvia, 81739 München (DE); Khalil, Mohamed, 80807 München (DE); Papadopoulos, Theodoros, 80333 München (DE)
(74) Vertreter: Siemens Patent Attorneys

(56) Entgegenhaltungen:
- EP-A1- 2 738 060
- WO-A1-2010/015265
- CN-A- 108 423 036
- DE-A1-102018 129 999

## Beschreibung

In vielen Personenzügen gestaltet sich ein Auffinden eines Sitz- oder Stehplatzes oftmals als schwierig oder unbequem, da häufig Reservierungssysteme ausfallen, ein Ersatzzug fährt und/oder der Personenzug überfüllt ist. Diese Schwierigkeit wird in vielen Fällen durch verstopfte Gänge aufgrund von gegenläufigen Bewegungsrichtungen der Zugpassagiere verursacht. Dies führt häufig dazu, dass ein Personenzug ungleich belastet wird, da sich in einigen Personenwagen erheblich mehr Personen befinden können als in anderen, obwohl letztere noch weitgehend frei sind. Dies kann unter anderem in einer ungleichmäßigen Abnutzung von Verschleißkomponenten des Personenzuges sowie zu versperrten Fluchtwegen führen. Darüber hinaus kann eine solche Situation von den Passagieren als erhebliche Komforteinbuße wahrgenommen werden.

Um die Zugpassagiere gleichmäßiger über einen Personenzug zu verteilen wird bisher meist über eine Lautsprecheranlage durchgesagt, in welchen Personenwagen noch Sitz- oder Stehplätze frei sind. Zu diesem Zweck wird allerdings zunächst ein Überblick über die Personenverteilung im Zug benötigt.

Aus der Publikation EP2738060A1 ist zudem bekannt, zum Verteilen von Personen in einem Personenzug auf freie Plätze weisende Richtungshinweise im Personenzug anzuzeigen.

Weiterhin ist aus den Publikationen WO2010/015265A1 und CN108423036A bekannt, Hinweise z.B. auf einem Mobilgerät anzuzeigen, die einen Zugpassagier zu einer Einstiegszone mit freien oder reservierten Plätzen leiten.

Es ist Aufgabe der vorliegenden Erfindung, ein Verfahren und eine Anordnung zum Verteilen von Personen in einem Personenzug zu schaffen, die eine effizientere Personenverteilung erlauben.

Gelöst wird diese Aufgabe durch ein Verfahren mit den Merkmalen des Patentanspruchs 1, durch eine Anordnung mit den Merkmalen des Patentanspruchs 9, durch ein Computerprogrammprodukt mit den Merkmalen des Patentanspruchs 10 sowie durch ein computerlesbares Speichermedium mit den Merkmalen des Patentanspruchs 11.

Zum Verteilen von Personen in einem Personenzug mit mehreren Personenwagen werden für einen jeweiligen Personenwagen eine Anzahl von darin befindlichen Personen und/oder eine Anzahl von freien Plätzen ermittelt, insbesondere geschätzt. Ein jeweiliger Platz kann hierbei ein Sitzplatz oder ein Stehplatz sowie reserviert oder nicht reserviert sein. Anhand der ermittelten wagenspezifischen Personenanzahlen und/oder Freiplatzanzahlen wird eine Personenstromsimulation zum Simulieren einer Bewegung von Personen im Personenzug initialisiert. Weiterhin wird eine Vielzahl von potenziellen Laufrichtungen ermittelt, für die eine Vielzahl von laufrichtungsspezifischen Bewegungsprofilen eingelesen wird. Erfindungsgemäß wird die initialisierte Personenstromsimulation für ein jeweiliges Bewegungsprofil ausgeführt, wobei jeweils ein eine resultierende Personenverteilung bewertender Verteilungswert ermittelt wird. Aus den potenziellen Laufrichtungen werden abhängig von den ermittelten Verteilungswerten spezifische Laufrichtungen selektiert, die als Laufrichtungshinweise auf personenspezifischen und/oder ortsspezifischen Richtungsindikatoren ausgegeben werden.

Zum Ausführen des erfindungsgemäßen Verfahrens sind eine Anordnung zum Verteilen von Personen in einem Personenzug, ein Computerprogrammprodukt sowie ein computerlesbares, vorzugsweise nichtflüchtiges Speichermedium vorgesehen.

Das erfindungsgemäße Verfahren, die erfindungsgemäße Anordnung sowie das erfindungsgemäße Computerprogrammprodukt können insbesondere mittels eines oder mehrerer Computer, eines oder mehrerer Prozessoren, anwendungsspezifischer integrierter Schaltungen (ASIC), digitaler Signalprozessoren (DSP) und/oder sogenannter "Field Programmable Gate Arrays" (FPGA) ausgeführt werden.

Mittels der Erfindung kann ein interaktives Passagierroutingsystem in Personenzügen implementiert werden, das eine Verteilung der Passagiere sowie deren Laufrouten optimieren und damit den Reisekomfort erheblich steigern kann.

Vorteilhafte Ausführungsformen und Weiterbildungen der Erfindung sind in den abhängigen Ansprüchen angegeben.

Nach einer vorteilhaften Ausführungsform der Erfindung können die wagenspezifischen Personenanzahlen und/oder Freiplatzanzahlen anhand von Gewichtssensoren, Drucksensoren, Kohlendioxidsensoren, Temperatursensoren, optischen Sensoren und/oder durch ortsspezifische Erfassung von Mobilgeräten ermittelt werden. So können Drucksensoren oder Gewichtssensoren im Boden eines jeweiligen Personenwagens angeordnet sein, mit denen unter der Annahme von Durchschnittgewichten von Passagieren mit Gepäck eine Personenanzahl abgeschätzt werden kann.

Gemäß einer weiteren vorteilhaften Ausführungsform der Erfindung können durch die Verteilungswerte eine Personendichte, eine gegenläufige Bewegung von Personen, eine Zeitdauer bis zum Erreichen eines freien Platzes, eine Bewegungsdauer, eine von Personen zurückzulegende Strecke, ein Freihalten von Fluchtwegen oder Feuerlöschern, eine Belastung von Komponenten des Personenzugs und/oder eine vorzugsweise gewichtete Kombination hiervon quantifiziert werden. Durch einen jeweiligen Verteilungswert kann insbesondere eine Verteilungsqualität gemäß den vorstehenden Verteilungskriterien und Bewegungskriterien quantifiziert werden. So können gezielt Laufrichtungen, die gemäß Verteilungswert zu einer hohen Verteilungsqualität führen, selektiert werden, um einen Verteilungsvorgang in bevorzugter Weise durchzuführen und/oder einen bevorzugten Verteilungszustand zu erreichen.

Vorzugsweise können die Laufrichtungshinweise mittels Leuchtpfeilen, mittels Displays, als Audiohinweise, als außerhalb des Personenzuges wahrnehmbare Türhinweise und/oder auf personenspezifischen Mobilgeräten ausgegeben werden. Auf diese Weise können die Passagiere effizient darüber informiert werden, in welcher Richtung sie schneller oder mit höherer Wahrscheinlichkeit einen freien Platz oder einen für sie reservierten Platz finden können.

Nach einer vorteilhaften Weiterbildung der Erfindung kann eine erste Person mit Platzreservierung lokalisiert sowie einem reservierten Platz zugeordnet werden. Die Personenstromsimulation kann dann anhand der Lokalisierung und Zuordnung der ersten Person initialisiert werden. Mithin kann ein für die erste Person spezifischer Laufrichtungshinweis spezifisch an die erste Person ausgegeben werden. Die Zuordnung der ersten Person zum reservierten Platz kann insbesondere durch einen Check-In der ersten Person, beispielsweise mittels eines Smartphones oder eines anderen Mobilgerätes veranlasst werden. Zur Lokalisierung der ersten Person kann sein Mobilgerät lokalisiert werden, z.B. indem festgestellt wird, an welchem WLAN-Hotspot das Mobilgerät aktuell angemeldet ist. Auf dem Mobilgerät kann dann auch ein jeweiliger personenspezifischer Laufrichtungshinweis ausgegeben werden.

Gemäß einer weiteren vorteilhaften Weiterbildung der Erfindung kann ein Personengruppenmerkmal einer zweiten Person erfasst werden und diese anhand des erfassten Personengruppenmerkmals einer vorgegebenen Personengruppe zugeordnet werden. An die zweite Person kann dann ein personengruppenspezifischer Laufrichtungshinweis ausgegeben werden. Als Personengruppen können insbesondere Passagiere, Schaffner oder Wartungspersonal vorgesehen sein. Die jeweiligen Personengruppen können bei der Ermittlung der Verteilungswerte unterschiedlich, insbesondere personengruppenspezifisch gewichtet werden. So können beispielsweise Laufwege von Schaffnern gegenüber Laufwegen von Passagieren bevorzugt optimiert werden.

Ein Ausführungsbeispiel der Erfindung wird nachfolgend anhand der Zeichnung näher erläutert. Dabei veranschaulichen jeweils in schematischer Darstellung:
- Figur 1: einen Personenzug mit einer erfindungsgemäßen Anordnung zum Verteilen von Personen,
- Figur 2: eine erfindungsgemäße Anordnung in detaillierterer Darstellung und
- Figur 3: ein Ablaufdiagramm eines erfindungsgemäßen Verfahrens.

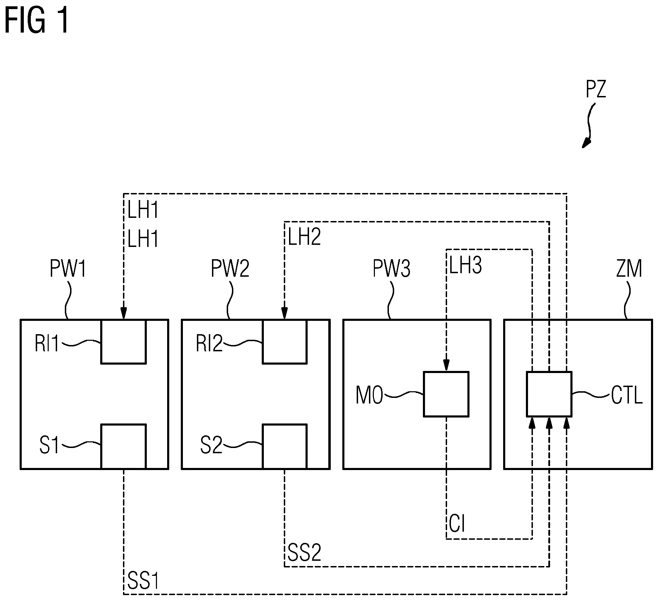

Figur 1 veranschaulicht einen Personenzug PZ mit einer erfindungsgemäßen Anordnung zum Verteilen von Personen über den Personenzug PZ. Letzterer weist eine Zugmaschine ZM sowie mehrere Personenwagen PW1, PW2 und PW3 auf, die jeweils über eine Vielzahl von Plätzen verfügen. Die Plätze können Sitzplätze oder Stehplätze, reservierte Plätze oder nicht reservierte Plätze sein.

In jedem der Personenwagen PW1, PW2 und PW3 befindet sich mindestens ein wagenspezifischer und/oder ortspezifischer Sensor zum Ermitteln einer Anzahl von in einem jeweiligen Personenwagen befindlichen Personen und/oder einer Anzahl von freien Plätzen in einem jeweiligen Personenwagen. In der Regel genügt es, die die Personenanzahlen oder Freiplatzanzahlen abzuschätzen. Aus Übersichtlichkeitsgründen sind in Figur 1 nur Sensoren S1 und S2 in den Personenwagen PW1 und PW2 explizit dargestellt.

Als Sensoren können insbesondere Gewichtsensoren, Drucksensoren, Kohlendioxidsensoren, Temperatursensoren und/oder optische Sensoren vorgesehen sein. So kann in einem jeweiligen Personenwagen mittels im Boden verbauter Drucksensoren oder Gewichtsensoren eine Gewichtszunahme gemessen werden und unter der Annahme von Durchschnittsgewichten für einen Passagier mit Gepäck eine Personenanzahl abgeschätzt werden. Mittels Kohlendioxidsensoren kann aus einer Zunahme einer Kohlendioxidkonzentration in der Atemluft auf die Personenanzahl geschlossen werden. Ebenso können die im jeweiligen Personenwagen befindlichen Personen durch optische Sensoren, wie z.B. Kameras optisch erfasst und gezählt werden. Weiterhin kann mittels Temperatursensoren insbesondere von Heizungen oder Klimaanlagen ein Erwärmungsgradient ermittelt werden und daraus eine Personenanzahl abgeleitet werden. Darüber hinaus können auch Anmeldungen von Mobilgeräten an einem jeweiligen WLAN-Hotspot zur Zählung herangezogen werden. Aus einer sensorisch ermittelten Personenanzahl und einer vorgegebenen Gesamtanzahl von Plätzen im betreffenden Personenwagen kann schließlich auch die Anzahl freier Plätze in diesem Personenwagen abgeschätzt werden. Umgekehrt kann aus einer anderweitig ermittelten Anzahl an freien Plätzen mittels der vorgegebenen Gesamtanzahl an Plätzen eine Personenanzahl ermittelt werden.

Der jeweilige Sensor S1 bzw. S2 übermittelt fortlaufend Sensorsignale SS1 bzw. SS2 aus einem jeweiligen Personenwagen PW1 bzw. PW2 zu einer Steuerung CTL des Personenzuges PZ.

Weiterhin sind im vorliegenden Ausführungsbeispiel im Personenwagen PW3 ein oder mehrere Mobilgeräte MO von Passagieren mit Platzreservierung beispielhaft dargestellt. Diese Passagiere checken sich mittels ihrer Mobilgeräte MO für die Bahnfahrt ein und werden infolgedessen jeweils einem reservierten Platz zugeordnet. Darüber hinaus werden die Mobilgeräte MO und damit die zugehörigen Passagiere im oder außerhalb des Personenzugs PZ lokalisiert, z.B. indem festgestellt wird, an welchem WLAN-Hotspot das jeweilige Mobilgerät MO angemeldet ist. Im Rahmen der Anmeldung eines jeweiligen Mobilgeräts MO werden Check-In-Angaben CI vom jeweiligen Mobilgerät MO zur Steuerung CTL übermittelt. Die Mobilgeräte MO dienen damit gewissermaßen als personenspezifische Sensoren, die zusätzlich zu den wagenspezifischen Sensoren S1 und S2 zur Personenzählung und Personenlokalisierung verwendet werden.

Die Steuerung CTL umfasst einen Bordcomputer und erfasst fortlaufend, vorzugsweise in Echtzeit die Sensorsignale SS1 und SS2 sowie die Check-In-Angaben CI. Die Sensorsignale SS1 und SS2 sowie die Check-In-Angaben CI werden durch die Steuerung CTL ausgewertet, um fortlaufend und vorzugsweise in Echtzeit aktuelle Personenanzahlen, Freiplatzanzahlen und Lokalisierungsangaben für die Personenwagen, hier PW1, PW2 und PW3 zu ermitteln.

Anhand der ermittelten Personenanzahlen, Freiplatzanzahlen und Lokalisierungsangaben führt die Steuerung CTL erfindungsgemäß eine Vielzahl von ortsaufgelösten Personenstromsimulationen durch. Die Personenstromsimulationen simulieren hierbei eine Bewegung von Personen im Personenzug PZ. Als Resultat der Personenstromsimulationen werden durch die Steuerung CTL für einen jeweiligen Personenwagen PW1 bzw.PW2 optimierte Laufrichtungshinweise LH1 bzw. LH2 ermittelt und auf einem im oder am Personenwagen PW1 befindlichen Richtungsindikator RI1 bzw. einem im oder am Personenwagen PW2 befindlichen Richtungsindikator RI2 ausgegeben. Die Richtungsindikatoren RI1 und RI2 sind ortsspezifisch, insbesondere wagenspezifisch an verschiedenen Positionen im oder am jeweiligen Personenwagen angebracht. Als Richtungsindikatoren RI1 und RI2 können beispielsweise elektronisch steuerbare Leuchtsignale, Leuchtpfeile, Displays, Lautsprecher für Audiohinweise und/oder auch außerhalb des Personenzugs PZ wahrnehmbare Türhinweise verwendet werden.

Als weiteres Resultat der Personenstromsimulationen werden Laufrichtungshinweise LH3 ermittelt, die spezifisch für einen jeweiligen per Mobilgerät MO angemeldeten Passagier optimiert sind. Die jeweiligen personenspezifischen Laufrichtungshinweise LH3 werden vorzugsweise auf dem Mobilgerät MO des jeweiligen Passagiers ausgegeben, das damit als personenspezifischer Richtungsindikator fungiert.

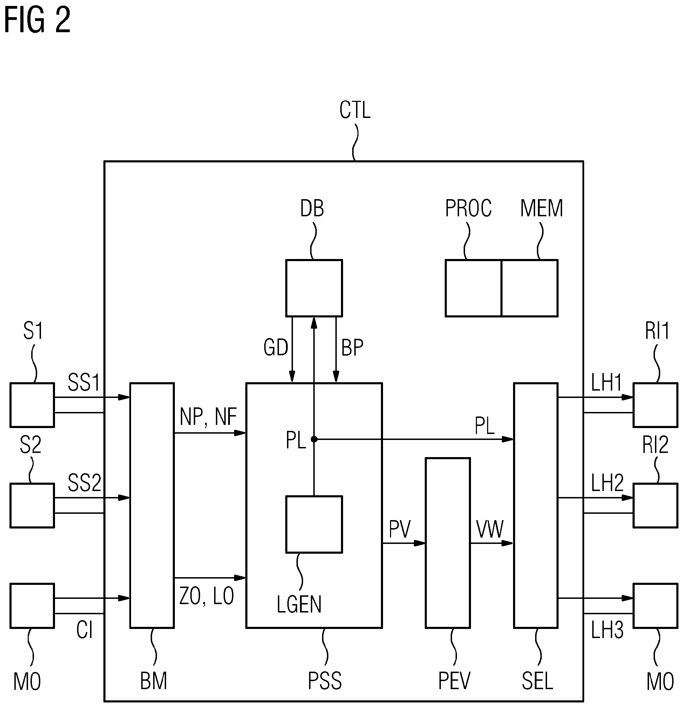

Figur 2 veranschaulicht eine erfindungsgemäße Anordnung in detaillierterer Darstellung. Insofern in Figur 2 die gleichen oder korrespondierende Bezugszeichen verwendet werden wie in Figur 1, werden hierdurch die gleichen oder korrespondierende Entitäten bezeichnet, die vorzugsweise wie oben beschrieben implementiert oder realisiert sind.

Die erfindungsgemäße Anordnung umfasst eine Steuerung CTL, die über einen Prozessor PROC zum Ausführen von darauf ablaufenden Verfahrensschritten sowie über einen mit dem Prozessor PROC gekoppelten Speicher MEM zum Speichern von zu verarbeitenden Daten verfügt. Die Steuerung CTL empfängt die Sensorsignale SS1 und SS2 der Sensoren S1 und S2 sowie die Check-In-Angaben CI der Mobilgeräte MO, über die sich Passagiere für die Bahnfahrt angemeldet haben.

Die Sensorsignale SS1 und SS2 sowie die Check-In-Angaben CI werden einem Belegungsmodul BM der Steuerung CTL zugeführt. Das Belegungsmodul BM ermittelt aus den Sensorsignalen SS1 und SS2 sowie aus den Check-In-Angaben CI für jeden Personenwagen PW1, PW2 bzw. PW3 aktuelle wagenspezifische Personenanzahlen NP sowie Freiplatzanzahlen NF wie oben beschrieben. Darüber hinaus ordnet das Belegungsmodul BM anhand der Check-In-Angaben CI einem jeweiligen über sein Mobilgerät MO angemeldeten Passagier mit Platzreservierung einen reservierten Platz zu und lokalisiert diesen Passagier wie im Zusammenhang mit Figur 1 erläutert. Die jeweilige Platzzuordnung wird als personenspezifische Zuordnungsangabe ZO hinterlegt und die jeweilige Lokalisierung als personenspezifische Lokalisierungsangabe LO. Die Zuordnungsangaben ZO und die aktuellen Lokalisierungsangaben LO sowie die aktuellen Personenanzahlen NP und die aktuellen Freiplatzanzahlen NF werden vom Belegungsmodul BM zu einem Personenstromsimulationsmodul PSS der Steuerung CTL übermittelt.

Das Personenstromsimulationsmodul PSS wird zunächst anhand von wagenspezifischen Geometriedaten GD der einzelnen Personenwagen PW1, PW2 und PW3 initialisiert. Die Geometriedaten GD werden durch das Personenstromsimulationsmodul PSS aus einer Datenbank DB eingelesen und können Konstruktionsdaten oder andere Daten über die spezifische Geometrie der einzelnen Personenwagen PW1, PW2 und PW3, insbesondere über deren zugängliche Laufflächen umfassen. Das Personenstromsimulationsmodul PSS wird weiterhin anhand der wagenspezifischen Personenanzahlen NP und Freiplatzanzahlen NF sowie der personenspezifischen Zuordnungsangaben ZO und Lokalisierungsangaben LO initialisiert.

Anhand der zugeführten Daten GD, NP, NF, ZO und LO werden durch einen Laufrichtungsgenerator LGEN des Personenstromsimulationsmoduls PSS eine Vielzahl von potenziellen, aktuell möglichen Laufrichtungen PL für die in den Personenwagen PW1, PW2 und PW3 befindlichen Personen generiert. Der Laufrichtungsgenerator LGEN generiert insbesondere Laufrichtungen von einem mehr gefüllten Personenwagen zu einem weniger gefüllten Personenwagen sowie Laufrichtungen von Personen mit Reservierung zu den von ihnen reservierten Sitzplätzen. Darüber hinaus werden Variationen dieser Laufrichtungen generiert. Die potenziellen Laufrichtungen PL werden ortsspezifisch, insbesondere warenspezifisch und/oder personenspezifisch oder personengruppenspezifisch generiert. Die potenziellen Laufrichtungen PL können auch in Form einer ortsaufgelösten und/oder personenspezifischen Laufrichtungsverteilung generiert werden.

Zu einer oder mehreren potenziellen Laufrichtungen PL oder ortsaufgelösten Laufrichtungsverteilungen wird durch das Personenstromsimulationsmodul PSS jeweils ein laufrichtungsspezifisches Bewegungsprofil BP aus der Datenbank DB eingelesen. Die Bewegungsprofile BP können vorzugsweise empirische Wahrscheinlichkeitsverteilungen darstellen, die bei vorgegebenen Laufrichtungen jeweils angeben, mit welcher Häufigkeit sich wie viele Personen wie schnell und in welche Richtung typischerweise bewegen. Für derartige Bewegungsprofile BP sind eine Vielzahl von Bibliotheken mit realistischen Bewegungsmustern verfügbar.

Nach Einlesen eines jeweiligen Bewegungsprofils BP wird durch das initialisierte Personenstromsimulationsmodul PSS eine auf diesem Bewegungsprofil BP basierende Personenstromsimulation z.B. in Form einer Partikelsimulation und/oder einer agentenbasierten Simulation für die im Personenzug befindlichen Personen ausgeführt. Derartige Personenstromsimulationen lassen sich sehr effizient ausführen, so dass sie insbesondere in Echtzeit mitlaufen können. Zur Ausführung dieser Simulationen ist eine Vielzahl von Standardverfahren verfügbar.

Für jedes Bewegungsprofil BP wird durch die Personenstromsimulation jeweils eine hieraus resultierende Personenverteilung PV ermittelt und zu einem Bewertungsmodul PEV der Steuerung CTL übermittelt. Das Bewertungsmodul PEV bewertet eine jeweilige Personenverteilung PV und berechnet einen für diese Personenverteilung PV spezifischen Verteilungswert VW. Der Verteilungswert VW bewertet diese Personenverteilung PV und quantifiziert insbesondere eine Verteilungsqualität des simulierten Verteilungsvorgangs und/oder des simulierten Verteilungszustands dieser Personenverteilung PV. Als Bewertungskriterien können insbesondere eine Personendichte, eine gegenläufige Bewegung von Personen, eine Zeitdauer zum Erreichen eines freien Platzes, eine Bewegungsdauer, eine von einer Person zurückzulegende Strecke, ein Freihalten von Fluchtwegen oder Feuerlöschern und/oder eine Belastung von Komponenten des Personenzugs verwendet werden. Ein jeweiliger Verteilungswert VW kann vorzugsweise durch eine sogenannte Kostenfunktion für die Personenverteilung PV berechnet werden. Eine Kostenfunktion, die häufig auch als Belohnungsfunktion oder Verlustfunktion bezeichnet wird, wird im Rahmen numerischer Optimierungsverfahren oft dazu verwendet, einen zu optimierenden Parameter zu berechnen. Im vorliegenden Ausführungsbeispiel bildet die Kostenfunktion die obigen Bewertungskriterien für eine jeweilige Personenverteilung PV auf den jeweiligen Verteilungswert VW ab und gibt diesen zurück. Die ermittelten Verteilungswerte VW werden erfindungsgemäß dazu verwendet, die Laufrichtungen der Personen im Personenzug PZ hinsichtlich eines in der Kostenfunktion implementierten Optimierungsziels zu optimieren, um den Verteilungsvorgang in bevorzugter Weise durchzuführen und/oder einen bevorzugten Verteilungszustand zu erreichen.

Das Bewertungsmodul PEV übermittelt die berechneten Verteilungswerte VW zu einem Selektionsmodul SEL der Steuerung CTL. Parallel dazu werden die potenziellen Laufrichtungen PL vom Laufrichtungsgenerator LGEN zum Selektionsmodul SEL übertragen. Das Selektionsmodul SEL dient zum Selektieren von hinsichtlich der Verteilungswerte VW optimierten Laufrichtungen aus den potenziellen Laufrichtungen PL. Hierbei werden abhängig von den ermittelten Verteilungswerten VW aus den potentiellen Laufrichtungen PL diejenigen Laufrichtungen spezifisch selektiert, die gemäß der Verteilungswerte VW zu einer hohen Verteilungsqualität führen, um einen Verteilungsvorgang in bevorzugter Weise durchzuführen und/oder einen bevorzugten Verteilungszustand zu erreichen. Die selektierten Laufrichtungen sind ortsspezifisch, das heißt einer spezifischen Position im Personenzug PZ oder einem spezifischen Personenwagen zugeordnet, und/oder personenspezifisch, das heißt einer spezifischen Person bzw. dessen Mobilgerät zugeordnet. Dementsprechend werden die selektierten Laufrichtungen als ortsspezifische bzw. personenspezifische Laufrichtungshinweise LH1, LH2 und LH3 ausgegeben. Im vorliegenden Ausführungsbeispiel wird ein ortsspezifischer Laufrichtungshinweis LH1 an den Richtungsindikator RI1, ein ortsspezifischer Laufrichtungshinweis LH2 an den Richtungsindikator RI2 und die personenspezifischen Laufrichtungshinweise LH3 jeweils an das spezifisch zugeordnete, als personenspezifischer Richtungsindikator fungierende Mobiltelefon MO ausgegeben.

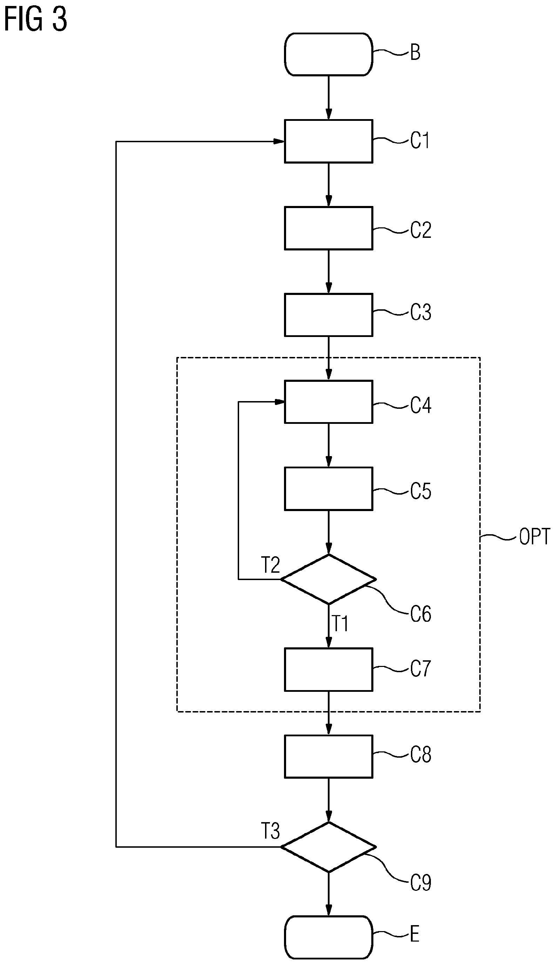

In Figur 3 ist ein Ablaufdiagramm eines erfindungsgemäßen Verfahrens mit Verfahrensschritten C1 bis C9 schematisch dargestellt. Die Verfahrensschritte C1 bis C9 werden durch die Steuerung CTL vorzugsweise in Echtzeit ausgeführt.

Nach einem Start B des Verfahrens werden im Verfahrensschritt C1 ein aktueller Belegungszustand der Personenwagen PW1, PW2 und PW3 und insbesondere die wagenspezifischen Personenanzahlen NP und die Freiplatzanzahlen NF mittels der Sensoren S1 und S2 sowie mittels der angemeldeten Mobilgeräte MO ermittelt. Darüber hinaus werden die Zuordnungsangaben ZO und die Lokalisierungsangaben LO bestimmt.

Im Verfahrensschritt C2 werden anhand der Geometriedaten GD, der Personenanzahlen NP, der Freiplatzanzahlen NF, der Zuordnungsangaben ZO sowie der Lokalisierungsangaben LO durch das Personenstromsimulationsmodul PSS auszuführende Personenstromsimulationen initialisiert.

Im Verfahrensschritt C3 werden die potenziellen Laufrichtungen PL generiert und die zugehörigen Bewegungsprofile BP eingelesen.

Im Verfahrensschritt C4 wird eine Schleife über alle Bewegungsprofile BP initialisiert. Darüber hinaus wird für ein jeweiliges Bewegungsprofil BP die initialisierte Personenstromsimulation ausgeführt und eine jeweils resultierende Personenverteilung PV ermittelt.

Im Verfahrensschritt C5 wird die jeweilige Personenverteilung PV bewertet und jeweils ein zugehöriger Verteilungswert VW ermittelt.

Im Verfahrensschritt C6 wird geprüft, ob alle Bewegungsprofile BP abgearbeitet wurden. Falls dies der Fall ist, wird ein Übergang T1 zum Verfahrensschritt C7 ausgelöst, andernfalls ein Rücksprung T2 zum Verfahrensschritt C4, um die Personenstromsimulation für das nächste Bewegungsprofil auszuführen.

Im Verfahrensschritt C7 werden aus den potenziellen Laufrichtungen PL diejenigen Laufrichtungen selektiert, bei denen ein jeweiliger Verteilungswert VW eine hohe Verteilungsqualität anzeigt.

Durch die Verfahrensschritte C4 bis C7 wird eine Routenoptimierung OPT implementiert, die für jede Position bzw. für jede angemeldete Person eine vorteilhafte Laufrichtung ermittelt.

Im Verfahrensschritt C8 werden die selektierten Laufrichtungen als ortsspezifische bzw. personenspezifische Laufrichtungshinweise LH1, LH2 bzw. LH3 an den jeweils zugeordneten Positionen im Personenzug PZ, im jeweils zugeordneten Personenwagen PW1, PW2 bzw. PW3 und/oder auf den Mobilgeräten MO der angemeldeten Personen angezeigt.

Im Verfahrensschritt C9 wird geprüft, ob eine Platzfindungsphase im Personenzug PZ beendet ist. Zu diesem Zweck kann beispielsweise geprüft werden, ob eine gleichmäßige Belegung der Personenwagen PW1, PW2 und PW3 erreicht ist und/oder ob Personenbewegungen im Personenzug PZ signifikant abnehmen oder zum Stillstand kommen. Falls die Platzfindungsphase noch andauert, wird ein Rücksprung T3 zum Verfahrensschritt C1 ausgeführt, um erneut einen aktuellen Bewegungszustand zu ermitteln. Andernfalls ist das Verfahrensende E erreicht.

Das erfindungsgemäße Verfahren wird vorzugsweise während des Ein- und Aussteigens der Passagiere sowie während der Verteilung der Passagiere auf die Personenwagen PW1, PW2 und PW3 bzw. auf die freien Plätze des Personenzugs PZ ausgeführt. Mittels der betriebsbegleitenden Personenstromsimulation kann ein interaktives Passagierroutingsystem im Personenzug PZ implementiert werden, das die Verteilung der Passagiere verbessert und beschleunigt und damit den Reisekomfort erheblich steigert.

## Patentansprüche

1. Verfahren zum Verteilen von Personen in einem Personenzug (PZ) mit mehreren Personenwagen (PW1, PW2, PW3) anhand von Laufrichtungshinweisen (LH1, LH2, LH3), wobei
a) für einen jeweiligen Personenwagen (PW1, PW2, PW3) eine Anzahl (NP) von darin befindlichen Personen und/oder eine Anzahl (NF) von freien Plätzen ermittelt wird,
b) anhand der ermittelten wagenspezifischen Personenanzahlen (NP) und/oder Freiplatzanzahlen (NF) eine Personenstromsimulation zum Simulieren einer Bewegung von Personen im Personenzug (PZ) initialisiert wird,
c) eine Vielzahl von potenziellen Laufrichtungen (PL) ermittelt wird, für die eine Vielzahl von laufrichtungsspezifischen Bewegungsprofilen (BP) eingelesen wird,
d) die initialisierte Personenstromsimulation für ein jeweiliges Bewegungsprofil (BP) ausgeführt wird, wobei jeweils ein eine resultierende Personenverteilung (PV) bewertender Verteilungswert (VW) ermittelt wird,
e) aus den potenziellen Laufrichtungen (PL) abhängig von den ermittelten Verteilungswerten (VW) spezifische Laufrichtungen selektiert werden, und
f) die selektierten Laufrichtungen als Laufrichtungshinweise (LH1, LH2, LH3) auf personenspezifischen und/oder ortsspezifischen Richtungsindikatoren (RI1, RI2, MO) ausgegeben werden.

2. Verfahren nach Anspruch 1, **dadurch gekennzeichnet, dass** die wagenspezifischen Personenanzahlen (NP) und/oder Freiplatzanzahlen (NF) anhand von Gewichtssensoren, Drucksensoren, Kohlendioxidsensoren, Temperatursensoren, optischen Sensoren und/oder durch ortsspezifische Erfassung von Mobilgeräten ermittelt werden.

3. Verfahren nach einem der vorhergehenden Ansprüche, **dadurch gekennzeichnet, dass**
durch die Verteilungswerte (VW) eine Personendichte, eine gegenläufige Bewegung von Personen, eine Zeitdauer bis zum Erreichen eines freien Platzes, eine Bewegungsdauer, eine von Personen zurückzulegende Strecke, ein Freihalten von Fluchtwegen oder Feuerlöschern, eine Belastung von Komponenten des Personenzugs (PZ) und/oder eine vorzugsweise gewichtete Kombination hiervon quantifiziert wird.

4. Verfahren nach einem der vorhergehenden Ansprüche, **dadurch gekennzeichnet, dass**
die Personenstromsimulation mittels einer Partikelsimulation und/oder einer agentenbasierten Simulation ausgeführt wird.

5. Verfahren nach einem der vorhergehenden Ansprüche, **dadurch gekennzeichnet, dass**
die Laufrichtungshinweise (LH1, LH2, LH3) mittels Leuchtpfeilen, mittels Displays, als Audiohinweise, als außerhalb des Personenzuges wahrnehmbare Türhinweise und/oder auf personenspezifischen Mobilgeräten (MO) ausgegeben werden.

6. Verfahren nach einem der vorhergehenden Ansprüche, **dadurch gekennzeichnet,**
**dass** eine erste Person mit Platzreservierung lokalisiert sowie einem reservierten Platz zugeordnet wird,
**dass** die Personenstromsimulation anhand der Lokalisierung (LO) sowie der Zuordnung (ZO) der ersten Person initialisiert wird, und
**dass** ein für die erste Person spezifischer Laufrichtungshinweis (LH3) spezifisch an die erste Person ausgegeben wird.

7. Verfahren nach einem der vorhergehenden Ansprüche, **dadurch gekennzeichnet,**
**dass** ein Personengruppenmerkmal einer zweiten Person erfasst wird,
**dass** die zweite Person anhand des erfassten Personengruppenmerkmals einer vorgegebenen Personengruppe zugeordnet wird, und
**dass** ein personengruppenspezifischer Laufrichtungshinweis an die zweite Person ausgegeben wird.

8. Verfahren nach Anspruch 7, **dadurch gekennzeichnet, dass**
bei der Ermittlung der Verteilungswerte (VW) eine personengruppenspezifische Gewichtung vorgenommen wird.

9. Anordnung zum Verteilen von Personen in einem Personenzug (PZ) mit mehreren Personenwagen (PW1, PW2, PW3) anhand von Laufrichtungshinweisen (LH1, LH2, LH3), eingerichtet zum Ausführen eines Verfahrens nach einem der vorhergehenden Ansprüche.

10. Computerprogramprodukt, eingerichtet zum Ausführen eines Verfahrens nach einem der Ansprüche 1 - 8.

11. Computerlesbares Speichermedium mit einem gespeicherten Computerprogrammprodukt nach Anspruch 10.

## Claims

1. Method for distributing passengers in a passenger train (PZ) having a plurality of passenger cars (PW1, PW2, PW3) on the basis of direction of movement indications (LH1, LH2, LH3), wherein,
a) for a respective passenger car (PW1, PW2, PW3), a number (NP) of passengers situated therein and/or a number (NF) of available spaces is determined,
b) a passenger flow simulation is initialized on the basis of the determined car-specific numbers of passengers (NP) and/or numbers of available spaces (NF) in order to simulate a movement of passengers in the passenger train (PZ),
c) a multiplicity of potential directions of movement (PL) are determined, for which a multiplicity of direction of movement-specific movement profiles (BP) are read in,
d) the initialized passenger flow simulation is executed for a respective movement profile (BP), wherein a distribution value (VW) that rates a resultant passenger distribution (PV) is determined in each case,
e) from the potential directions of movement (PL), depending on the determined distribution values (VW), specific directions of movement are selected and
f) the selected directions of movement are output as direction of movement indications (LH1, LH2, LH3) on passenger-specific and/or location-specific direction indicators (RI1, RI2, MO).

2. Method according to Claim 1, **characterized in that** the car-specific numbers of passengers (NP) and/or numbers of available spaces (NF) are determined on the basis of weight sensors, pressure sensors, carbon dioxide sensors, temperature sensors, optical sensors and/or through location-specific detection of mobile devices.

3. Method according to either of the preceding claims, **characterized in that**
the distribution values (VW) quantify a passenger density, opposing movement of passengers, a time until an available space is reached, a movement time, a path to be covered by passengers, the keeping clear of exits or fire extinguishers, loading of components of the passenger train (PZ) and/or a preferably weighted combination thereof.

4. Method according to one of the preceding claims, **characterized in that**
the passenger flow simulation is executed by way of a particle simulation and/or an agent-based simulation.

5. Method according to one of the preceding claims, **characterized in that**
the direction of movement indications (LH1, LH2, LH3) are output by way of lit arrows, by way of displays, as audio indications, as door indications able to be perceived outside the passenger train and/or on passenger-specific mobile devices (MO).

6. Method according to one of the preceding claims, **characterized**
**in that** a first passenger with a space reservation is located and assigned to a reserved space,
**in that** the passenger flow simulation is initialized on the basis of the location (LO) and the assignment (ZO) of the first passenger, and
**in that** a direction of movement indication (LH3) specific to the first passenger is output specifically to the first passenger.

7. Method according to one of the preceding claims, **characterized**
**in that** a passenger group feature of a second passenger is detected,
**in that** the second passenger is assigned to a predefined passenger group on the basis of the detected passenger group feature, and
**in that** a passenger group-specific direction of movement indication is output to the second passenger.

8. Method according to Claim 7, **characterized in that**
passenger group-specific weighting is performed when determining the distribution values (VW).

9. Arrangement for distributing passengers in a passenger train (PZ) having a plurality of passenger cars (PW1, PW2, PW3) on the basis of direction of movement indications (LH1, LH2, LH3), configured so as to execute a method according to one of the preceding claims.

10. Computer program product, configured so as to execute a method according to one of Claims 1 - 8.

11. Computer-readable storage medium containing a stored computer program product according to Claim 10.

## Revendications

1. Procédé de répartition de voyageurs dans un train de voyageurs (PZ) avec plusieurs voitures de voyageurs (PW1, PW2, PW3) sur la base d'indications de direction de marche (LH1, LH2, LH3), dans lequel
a) un nombre (NP) de voyageurs à bord et/ou un nombre (NF) de sièges libres est déterminé pour une voiture de voyageurs (PW1, PW2, PW3) respective,
b) sur la base du nombre de voyageurs (NP) et/ou du nombre de sièges libres (NF) déterminé spécifique à la voiture, une simulation de flux de voyageurs est initialisée pour simuler un déplacement de voyageurs dans le train de voyageurs (PZ),
c) une pluralité de directions de marche potentielles (PL) est déterminée, pour laquelle une pluralité de profils de déplacement (BP) spécifiques à la direction de marche est lue,
d) la simulation de flux de voyageurs initialisée est effectuée pour un profil de déplacement (BP) respectif, dans lequel une valeur de répartition (VW) évaluant une répartition résultante de voyageurs (PV) est déterminée à chaque fois,
e) des directions de marche spécifiques sont sélectionnées parmi les directions de marche potentielles (PL) en fonction des valeurs de distribution déterminées (VW), et
f) les directions de marche sélectionnées sont émises sous forme d'instructions de direction de marche (LH1, LH2, LH3) sur des indicateurs de direction spécifiques à un voyageur et/ou à un emplacement (RI1, RI2, MO).

2. Procédé selon la revendication 1, **caractérisé en ce que** le nombre de voyageurs (NP) et/ou nombre de sièges libres (NF)spécifique à la voiture sont déterminés par des capteurs de poids, des capteurs de pression, des capteurs de dioxyde de carbone, des capteurs de température, des capteurs optiques et/ou une détection spécifique à l'emplacement des appareils mobiles.

3. Procédé selon l'une des revendications précédentes, **caractérisé en ce que**
une densité de voyageurs, un déplacement de voyageurs en sens inverse, un temps nécessaire pour atteindre un siège libre, un temps de déplacement, une distance à parcourir par des voyageurs, un dégagement des voies d'évacuation ou des extincteurs, une charge sur les composants du train de voyageurs (PZ) et/ou une combinaison de préférence pondérée de ceux-ci est quantifiée par les valeurs de distribution (VW).

4. Procédé selon l'une des revendications précédentes, **caractérisé en ce que**
la simulation de flux de voyageurs est réalisée au moyen d'une simulation particulaire et/ou d'une simulation à base d'agents.

5. Procédé selon l'une des revendications précédentes, **caractérisé en ce que**
les indications de direction de marche (LH1, LH2, LH3) sont émises au moyen de flèches lumineuses, au moyen d'affichages, sous forme d'instructions sonores, sous forme d'instructions de porte perceptibles à l'extérieur du train de voyageurs et/ou sur des appareils mobiles spécifiques aux voyageurs (MO).

6. Procédé selon l'une des revendications précédentes, **caractérisé en ce qu'**un premier voyageur ayant une réservation de siège est localisé et affecté à un siège réservé,
**en ce que** la simulation de flux de voyageurs est initialisée sur la base de la localisation (LO) et de l'affectation (ZO) du premier voyageur, et
**en ce qu'**un indicateur de direction spécifique au premier voyageur (LH3) est émis spécifiquement au premier voyageur.

7. Procédé selon l'une des revendications précédentes, **caractérisé en ce qu'**une caractéristique de groupe de voyageurs d'un second voyageur est enregistrée,
**en ce que** le second voyageur est affecté à un groupe de voyageurs prédéterminé sur la base de la caractéristique de groupe de voyageurs enregistrée, et
**en ce qu'**une indication de direction de marche spécifique à un groupe de voyageurs est émise au second voyageur.

8. Procédé selon la revendication 7, **caractérisé en ce qu'**une pondération spécifique à un groupe de voyageurs est effectuée lors de la détermination des valeurs de répartition (VW).

9. Dispositif de répartition de voyageurs dans un train de voyageurs (PZ) avec plusieurs voitures de voyageurs (PW1, PW2, PW3) sur la base d'indications de direction de marche (LH1, LH2, LH3), agencées pour mettre en œuvre un procédé selon l'une des revendications précédentes.

10. Produit de programme informatique agencé pour exécuter un procédé selon l'une des revendications 1 à 8.

11. Support de stockage lisible par ordinateur stockant un produit de programme informatique selon la revendication 10.
